# EUROPEAN PATENT APPLICATION

(11) **EP 0 936 830 A1**
(43) Date of publication of application: **18.08.1999**
(21) Application number: 98301004.2
(22) Date of filing: 11.02.1998
(51) Int. Cl.: H04Q 7/38, H04B 7/185

(54) **Forced location updating**

(71) Applicant: ICO Services Ltd., Hammersmith, London W6 9BN (GB)
(72) Inventor: Grayson, Mark, Chiswick, London, W4 2QT (GB); Chomet, Patrick, London NW2 3SN (GB); Mullins, Dennis Roy, London, SE11 5UL (GB)
(74) Representative: Geary, Stuart Lloyd

(57) **Abstract**

In a cellular mobile telephone system, a mobile station (4a) is forced to perform a location update if the accumulated time, during which it has not been pageable by the network, exceeds a predetermined value. This period may be set dynamically by transmitting timer setting information in a broadcast control channel.

## Description

The present invention relates to a method of operating a mobile station in a mobile telephone network and to a mobile station.

It is known to provide a timer for ensuring that a mobile station periodically performs a location update to update its record in the visitor location register of the mobile switching centre at which it is registered. When the mobile station terminates a dedicated connection with the network, the timer is started and the mobile station transmits a location update request when the period, timed by the timer, expires.

It is also known to provide text messaging in a mobile telephone network. In the case of GSM (Global System for Mobile Communication), this facility is known as the Short Message Service (SMS). When the network receives a mobile terminated short message, it first establishes whether the mobile station is registered with the network. If the mobile station is not currently registered with the network, i.e. it cannot be immediately contacted, the home location register (home location register) record for the mobile station has a flag set to indicate that a message is waiting. If, on the other hand, the mobile station is registered with the network, the network will attempt to deliver the message by first paging the mobile station and then establishing a dedicated channel for the transmission of the message. Should it not be possible to deliver the message to the apparently reachable mobile station, the flag in the mobile station's home location register record will again be set. When the flag is set, the message will be delivered when the mobile station next performs a location update.

The use of a simple timer to cause periodic location updates does not offer acceptable service in situations where a mobile station cannot be paged but can originate a call. This may occur in a satellite mobile telephone system when a terrestrial network linking earth stations is severed.

Furthermore, it is desirable to make the forced locations updates as widely spaced as possible so as to minimise the signalling overhead in the system. However, it is also desirable to make the forced location updates frequent so that the delay in receiving stored short messages is small.

It is an aim of the present invention to provide a new manner of forcing communication between a mobile station and a mobile telephone network.

According to the present invention, there is provided a method of operating a mobile station in a mobile telephone network, the method comprising transmitting a signal to establish communication with a switching centre control function in response to the mobile station not being pageable for a predetermined period. The period is timed only when the mobile station is unpageable and stops being timed when the mobile station can be paged. However, a timer, which may be used to time the period, is not reset each time the mobile station becomes pageable. For instance, a period timed by such a timer may comprise two periods during which the mobile station was not pageable separated by a period during which the mobile station was pageable.

The signal to establish communication may be part of a location update process, such as is carried out in the GSM system. However, whatever terminology is employed, it will be appreciated that this signal will be involved in allowing the network to subsequently direct a call to the mobile station.

Preferably, a method according to the present invention comprises monitoring the ability of the mobile station to receive a paging signal; if the mobile station becomes unable to receive a paging signal, starting a timer; if the mobile station becomes able to receive a paging signal, stopping the timer; and if the timer reaches a predetermined value, performing a location update and resetting the timer.

In mobile telephone networks control information is often broadcast for reception by mobile stations. The information broadcast will depend in the nature of the particular system and may include channel frequency information and, in the case of a satellite mobile telephone system, may include the co-ordinates of a cell defined by a beam from a satellite. Reception of this broadcast control channel may be monitored for monitoring the ability of the mobile station to receive a paging signal.

The broadcast information may include the period for the timer. Consequently, the mobile station can be operated to set the period of the timer in dependence on received broadcast information. In this way the signalling overhead of the system can be adjusted to respond to traffic density. The broadcast information may give the timer period in units of time, may indicate an increase or decrease by a predetermined or a specified amount, or may indicate a selection from a predetermined set of periods.

The most common reason for an active mobile station not being pageable is the lack of a sufficiently good signal path between the mobile station and a base station. However, in the case of a satellite mobile satellite system, in which a plurality of earth stations are linked by a terrestrial network, a mobile station may not be pageable because the network is incomplete or damaged between the network node at which the mobile station is registered and an earth station serving its current location. In this situation, information regarding network interconnections may be broadcast and the mobile station can determine whether it can be paged from the broadcast network interconnection information. Various proposals have been made for satellite mobile telephone systems. These include the Inmarsat-M system, the IRIDIUM™ system described in EP-A-0365885, the ICO™ system described in GB-A-2295296 and the ODYSSEY™ system described in EP-A-0510789.

According to the present invention, there is also provided a mobile station comprising a controller configured to control the mobile station to perform a method according to any preceding claim.

An embodiment of the present invention will now be described, by way of example, with reference to the accompanying drawings, in which:-
Figure 1 illustrates a satellite mobile telephone system;
Figure 2 shows a mobile station;
Figure 3 is a schematic diagram of a satellite access node of the system of Figure 1;
Figure 4 is a data flow diagram for the system of Figure 1;
Figure 5 is a timing chart illustrating an embodiment of the present invention; and
Figure 6 is a flow chart illustrating an embodiment of the present invention.

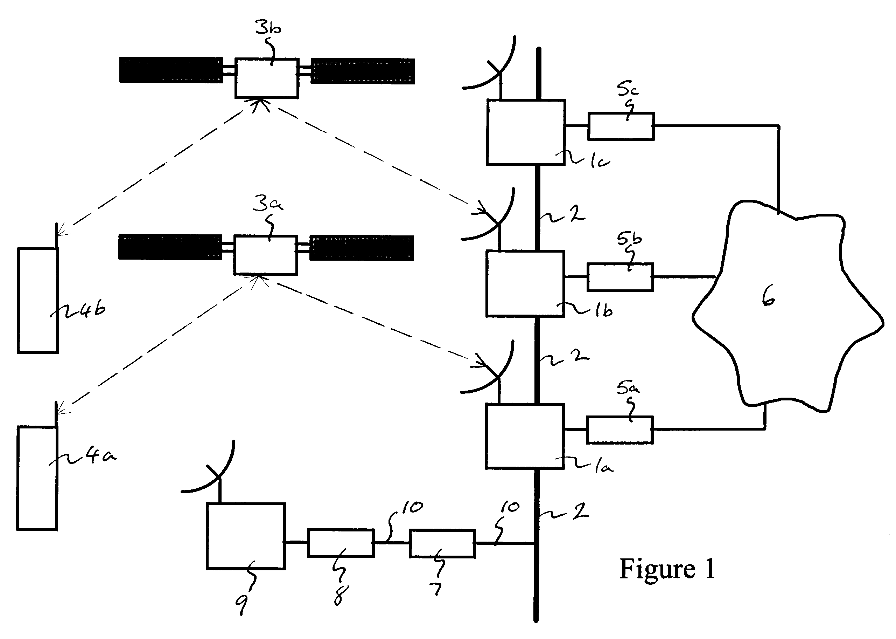

Referring to Figure 1, a satellite mobile telephone system comprises a plurality of satellite access nodes 1a, 1b, 1c interconnected by a high capacity digital network 2 (hereinafter "the backbone network"), a plurality of satellites 3a, 3b, a plurality of a mobile stations 4a, 4b, gateway mobile satellite switching centres 5a, 5b, 5c providing connections between the satellite access nodes 1a, 1b, 1c and other networks 6, a network management centre 7, a satellite control centre 8 and a tracking, telemetry and control station 9. The network management centre 7, the satellite control centre 8 and the tracking, telemetry and control station 9 are interconnected by a lower capacity digital network 10 which is also connected to the backbone network 2. The other networks 6 comprise the public switched telephone network (PSTN), cellular telephone networks and the like.

The satellite control centre 8 and the tracking, telemetry and control station 9 control the operation of the satellites 3a, 3b, for instance setting transmit power levels and transponder input tuning, as directed by the network management centre 7. Telemetry signals from the satellites 3a, 3b are received by the tracking, telemetry and control station 9 and processed by the satellite control centre 8 to ensure that the satellites 3a, 3b are functioning correctly.

The satellites 3a, 3b repeatedly broadcast control information in broadcast control channels (BCCH). A mobile station 4a repeatedly receives and decodes the information in the BCCH broadcast by the satellite 3a, 3b currently serving it.

During a telephone call, a mobile station 4a, 4b communicates with a satellite 3a, 3b via a half duplex channel comprising a downlink channel and an uplink channel. The channels comprise TDMA time slots on frequencies allocated on initiation of the call or re-allocated during a call.

The satellites 3a, 3b are in non-geostationary orbits and comprise generally conventional satellites, such as the known Hughes HS601 model, and may include features as disclosed in GB-A-2288913. Each satellite 3a, 3b is arranged to generate an array of beams covering a footprint beneath the satellite, each beam including a number of different frequency channels and time slots.

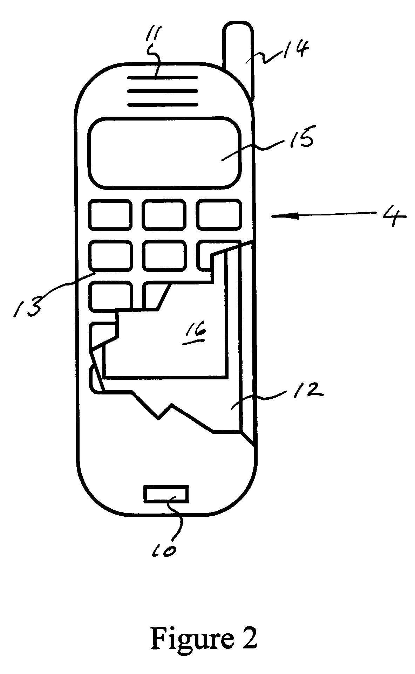

Referring to Figure 2, a mobile station 4 is generally similar to the units presently available for GSM networks and comprises a codec, a controller 16, a microphone 10, a loudspeaker 11, a battery 12, a keypad 13, a radio frequency interface, an antenna 14, a display 15 and subscriber identification module (SIM) smart card.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM includes a processor and a non-volatile memory which stores data identifying the subscriber and data for use in encrypted communication.

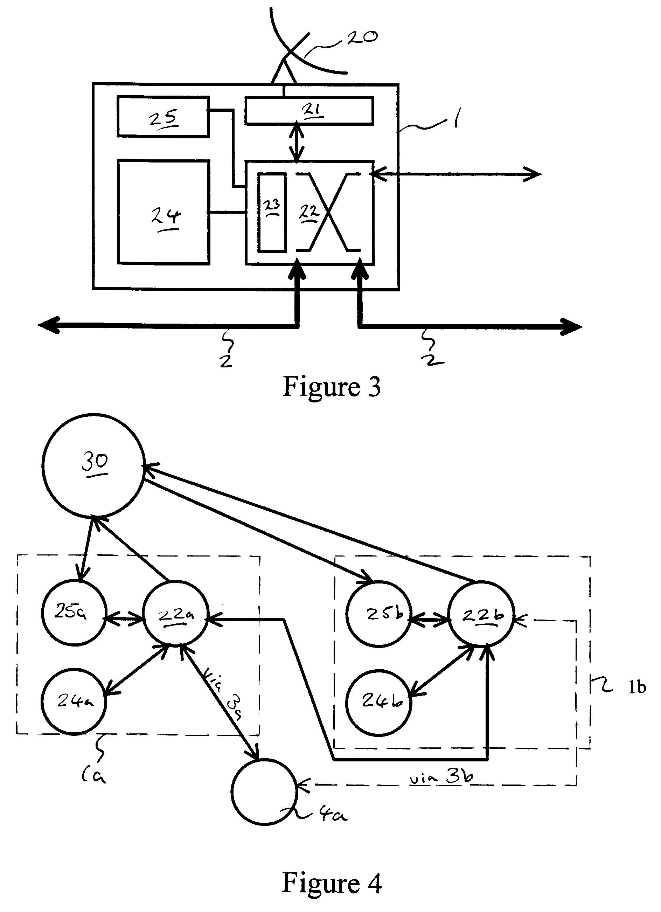

Referring to Figure 3, a satellite access node 1 comprises a dish antenna 20 mounted for tracking satellites, transmitter and receiver circuits 21 including amplifiers, multiplexers, demultiplexers and codecs, a visited mobile satellite switching centre 22 including a controller 23, a visitor location register 24 and a voice mail box unit 25. The mobile satellite switching centre 22 is coupled for communications signals to the backbone network 2, to a gateway and to the transmitter and receiver circuits 21. The controller 23 is coupled for data signals to the visitor location register 24 and the voice mail box unit 25 and may also send and receive data signals via the backbone network 2.

The controller 23 responds to addresses on incoming communications signals, from the antenna 20, the gateway and the backbone network 2, by controlling the mobile satellite switching centre 22 to output the communications signals on the appropriate paths to their destinations, i.e. the antenna 20, the gateway or the backbone network 2.

The visitor location register 24 maintains a record of each of the subscribers registered with the satellite access node 1. The voice mail box unit 25 provides storage space for voice mail messages for subscribers.

Referring to Figure 4, a database 30, called the home location register, contains records relating to each mobile station 4a, 4b. The record contains the mobile station's identity (International Mobile Subscriber Identity or IMS), the current status of the mobile station (whether it is "local" or "global" as will be described in greater detail below), the geographical position of the mobile station, the home mobile satellite switching centre with which the mobile station is registered (to enable billing and other data to be collected at a single point), the currently active satellite access node with which the mobile station is in communication via a satellite, an individual encyphering key and the address of an associated voice mail box unit location.

The home location register 30 may be located in the network management centre 7 (see Figure 1) or may be distributed among the satellite access nodes 1a, 1b, 1c (see Figure 1).

Referring to Figures 1 to 4, a mobile station 4a may be registered with one of two distinct statuses; "local" in which the mobile station 4a is permitted to communicate only through one local area or part of the satellite system network, and "global", which entitles the mobile station 4a to communicate through any part of the satellite mobile telephone system.

The mobile station 4a performs an automatic registration process (location update), of the kind well known in the art of cellular terrestrial communications, on each occasion when the mobile station 4a is switched on, periodically whilst the mobile station 4a is operating and, as will be explained in detail below, when the mobile station 4a has been unpageable for a predetermined period. As is conventional, the registration process takes the form of transmitting of a signal identifying the mobile station 4a (e.g. by transmitting its telephone number on a common hailing or signalling channel).

The transmitted signal is picked up by one or more of the satellites 3a, 3b. Under normal circumstances, the signal is picked up by a plurality of satellites 3a, 3b, and the received signal strength or time of arrival are transmitted, together with the identity of the mobile station 4a and the identity of the satellite 3a, 3b receiving the signal, to the home location register 30 via the visited mobile satellite switching centres 22a, 22b of the satellite access nodes 1a, 1b for which the satellites 3a, 3b are in communication.

The home location register 30 calculates, on the basis of the received-signal arrival times, the terrestrial position of the mobile station 4a which is then stored in the mobile station's record. When it is necessary to communicate with the mobile station, the identity of the satellite access node 1a, 1b, 1c most suitable for communicating with the mobile station 4a is determined. This is typically done by comparing the stored position of the mobile station 4a with the positions of each of the satellite access nodes 1a, 1b, 1c and selecting the nearest. However, account may also or instead be taken of the strengths of the signals received via the satellites 3a, 3b, or of other factors such as network congestion which may result, in borderline cases, in the selection of a satellite access node 1a, 1b, 1c which is not geographically closest to the mobile station 4a. The identity of the allocated satellite access node 1a is then stored in the mobile station's record in the visitor location register 25a of the visited mobile satellite switching centre 22a where the mobile station 4a is registered. The information stored in the visitor location register 25a is used for routing mobile terminated calls to the mobile station 4a.

When a mobile terminated call is made to the mobile station 4a, it is directed to the visited mobile satellite switching centre 22a at which the mobile station 4a is registered. The visited mobile satellite switching centre 22a causes a paging signal to be sent to the cells where the called mobile station 4a is expected to be, i.e. via the satellites 3a, 3b serving cells covering the mobile station's location. When the mobile station 4a receives the paging signal, it enters into a dialogue with the network to obtain a channel for the call. If the mobile station 4a does not respond to the paging signal, the network will inform the calling party that the mobile station 4a cannot be reached.

In addition to speech traffic, the mobile satellite telephone system supports the sending of short text messages that are displayed on the displays 15 of the mobile stations 4. When such a message is sent to the mobile station 4a, it is directed to the visited mobile satellite switching centre 22a at which the mobile station 4a is registered. The visited mobile satellite switching centre 22a causes a paging signal to be sent to the cells where the called mobile station 4a is expected to be. When the mobile station 4a receives the paging signal, it enters into a dialogue with the network and receives the message. If the mobile station 4a does not respond to the paging signal, the message is stored at the visited mobile satellite switching centre 22a and a flag is set in the home location register 30 to indicate that a message is waiting for the mobile station 4a.

The various channel types, e.g. traffic and signalling channels, used in the system fall into three "penetration" categories having differing nominal link margins. Traffic channels and "in band" control channels, e.g. slow and fast associated control channels, are in the nominal penetration category. Nominal penetration channels are designed to work when a hand-held mobile station is in its normal operating position, close to a user's head, with its antenna deployed and in direct line-of-sight to a satellite. Control channels for setting up a call, including paging channels, are medium penetration channels. Medium penetration channels are designed to work when the mobile station is not held in its optimum position, e.g. in a suitcase or with its antenna retracted, and/or with light shadowing in the line-of-sight to a satellite. High penetration channels are used for signalling to the mobile station when two-way communication is not possible due to bad path conditions. For instance, if a mobile station does not respond to a page signal, a short message informing the user of the attempted call may be sent using a high penetration channel.

The operation of an embodiment of the present invention will now be described. It is to be understood that the method described below is carried out in addition to the forced periodic location update method. However, the forced periodic location update method steps have been omitted so that the present invention may be more readily understood.

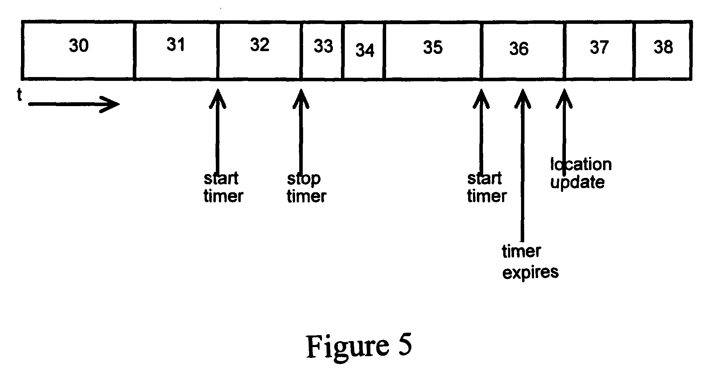

As a user moves around with the mobile station 4a, the quality of the signal path to the currently serving satellite 3a, 3b will vary, for instance as the user enters and leaves buildings. Referring to Figure 5, the mobile station may pass through a first nominal penetration region 30, a first medium penetration region 31, a first high penetration out of contact region 32, a second medium penetration region 33, a second nominal penetration region 34, a third medium penetration region 35, a second high penetration out of contact region 36, a fourth medium penetration region 37 and finally a third nominal penetration region 38. In nominal penetration regions traffic channels can be used. In medium penetration common control channels, but not traffic channels can be used. In high penetration out of contact regions, only high penetration channels, if even these, can be used.

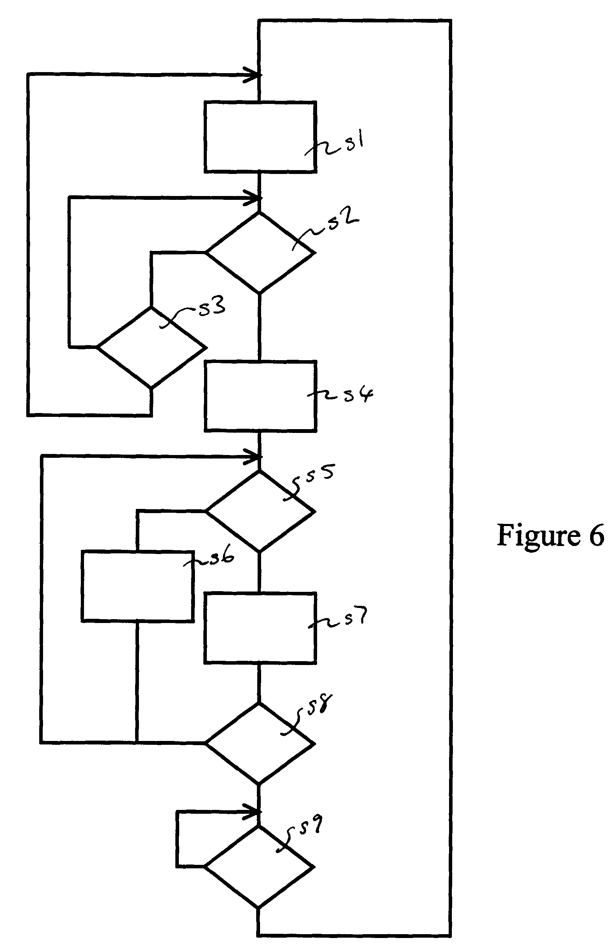

Referring to Figure 6 which illustrates the operation of the mobile station 4a under the control of the program of the controller 16, it will be assumed that the mobile station 4a is switched on in the first nominal penetration region 30. On being turned on, the mobile station 4a transmits a location update request to the network via the currently serving satellite 3a (step s1). The mobile station 4a then waits for a location update accept signal from the network (step s2). If the accept signal is not received within a predetermined period (step s3), the mobile station's controller 16 (Figure 2) returns to step s1. On receiving the location update accept, the "unpageable" timer, implemented by the controller 16 is reset (step s4).

When the timer has been reset (step s4), the mobile station 4a determines whether it can receive a BCCH (step s5). If a BCCH is being received and the last satellite access node used is accessible, the timer is stopped, if it is running, (step s6) and step s5 is repeated. While the mobile station 4a remains in the first nominal penetration region 30 or the first medium penetration region 31, it will continue to receive a BCCH and the controller 16 will loop through steps s5 and s6.

However, as soon as the mobile station 4a enters the first high penetration out of contact region 32 or enters a cell that the satellite access node, last used by the mobile station 4a, cannot send a paging signal to, the controller 16 determines at step s5 that a BCCH is not being received and proceeds to start the timer at step s7. Paging signals are not in the high penetration category but are medium penetration signals since they must alert a mobile station of an incoming call in a less than optimum position. After step s7, the controller 16 determines whether the timer has expired at step s8. The user is in the first high penetration out of contact region 32 for less that the time out period of the timer and the controller 16 therefore just loops through steps s5, s7 and s8. It should be noted that the timer is only started at step s7 if it is not already running.

When the user enters the second medium penetration region 33, the mobile station 4a can again receive a BCCH and the controller 16 begins to loop through steps s5 and s6, stopping the timer but not resetting it. The controller 16 continues to loop through steps s5 and s6 while the user is in the second medium penetration region 33, the second nominal penetration region 34 and the third medium penetration region 35.

On entering the second high penetration out of contact region 36, the mobile station 4a loses the BCCH and the controller 16 performs step s7 to restart the timer. Initially, the controller 16 loops through steps s5, s7 and s8. However, after a while, the timer reaches a predetermined threshold value and is determined to have expired (step s8).

Once the timer has expired, the mobile station 4a repeatedly checks for a BCCH (step s9). The mobile station 4a will not receive a BCCH until it enters the fourth medium penetration region 37. However, once the user has entered the fourth medium penetration region 37, the controller 16 determines that a BCCH is present (steps s9) and returns to step s1 and performs a location update routine.

On performing the location update the mobile station 4a will be informed whether any short messages are waiting to be down loaded on the basis of the messages waiting flag in the mobile station's home location register record in the conventional manner

## Claims

1. A method of operating a mobile station (4a) in a mobile telephone network, the method comprising transmitting a signal to establish communication with a switching centre control function in response to the mobile station (4a) not being pageable for a predetermined period.

2. A method according to claim 1, wherein said period is not unbroken.

3. A method according to claim 1 or 2, comprising:
monitoring the ability of the mobile station (4a) to receive a paging signal;
if the mobile station (4a) becomes unable to receive a paging signal, starting a timer;
if the mobile station (4a) becomes able to receive a paging signal, stopping the timer; and
if the timer reaches a predetermined value, performing a location update and resetting the timer.

4. A method according to claim 3, wherein reception of a broadcast control channel is monitored for monitoring the ability of the mobile station to receive a paging signal.

5. A method according to any preceding claim, wherein said signal comprises a location update request signal.

6. A method of operating a mobile station in a satellite mobile telephone network, the method being according to any preceding claim.

7. A mobile station comprising a controller (16) configured to control the mobile station (4a) to perform a method according to any preceding claim.
